# DEMANDE DE BREVET EUROPEEN

(11) **EP 0 643 536 A1**
(43) Date de publication de la demande: **15.03.1995**
(21) Numéro de dépôt: 94202563.6
(22) Date de dépôt: 07.09.1994
(51) Int. Cl.: H04N 7/167

(54) **Procédé pour l'embrouillage et le désembrouillage en télévision, et émetteur et récepteur utilisant ce procédé**

(30) Priorité: 15.09.1993 FR 9310997
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Bourel, Guy, F-75008 Paris (FR); Potier, Loic, F-75008 Paris (FR)
(74) Mandataire: Caron, Jean

(57) **Abrégé**

Dans un système de diffusion de télévision comprenant une voie vidéo analogique embrouillée avec un mot de contrôle qui est changé de temps en temps et une voie son en standard NICAM embrouillée avec un mot de contrôle qui est aussi changé de temps en temps, des circuits de modulation et d'embrouillage différents et munis de bases de temps indépendantes étant présents pour le son et pour la vidéo, un seul générateur du mot de contrôle est utilisé pour le son et pour la vidéo et lorsque ce mot de contrôle est changé pour la vidéo (17), un bit ou un groupe de bits spécifique est incorporé dans le paquet de données de son suivant (18), indiquant qu'un nouveau mot de contrôle est disponible, mais le nouveau mot de contrôle ne sera utilisé que pour un paquet de données ultérieur (19).

Applications : télévision embrouillée.

## Description

La présente invention concerne un procédé pour l'embrouillage et le désembrouillage dans un système de diffusion et de réception d'un signal de télévision embrouillé comprenant d'une part un signal vidéo analogique et d'autre part des données de son numérique transmises en multiplex de fréquences, dans lequel le signal vidéo analogique est transmis par lignes et trames dont les instants de début sont commandés par une première base de temps, et les données de son numérique sont transmises sous la forme de paquets successifs dont des parties sont transmises en clair et d'autres sont transmises embrouillées, le rythme des données étant contrôlé par une seconde base de temps non synchrone avec celle de la vidéo, cependant que des mots de contrôle, qui sont utilisés pour l'embrouillage et le désembrouillage, sont changés au cours du temps, et que lorsqu'on désire changer de mot de contrôle pour le signal vidéo, le nouveau mot de contrôle est d'abord déterminé et transmis, puis l'ordre d'utiliser le nouveau mot est transmis à la partie vidéo.

Elle concerne aussi un émetteur et un récepteur de télévision pour émettre ou recevoir selon le dit procédé.

Un procédé d'embrouillage de télévision correspondant au préambule ci-dessus est connu du document EP-A-0 448 534. Ce document décrit un moyen pour embrouiller un signal de son dans le standard dit NICAM. Le document ne suggère aucun moyen pour embrouiller la vidéo de façon correspondante.

Partant d'un moyen connu pour embrouiller un signal de son et d'un autre moyen, connu également, pour embrouiller un signal vidéo, moyens complètement indépendants l'un de l'autre, l'idée de l'invention est de simplifier le système en mettant en commun certains éléments des dispositifs d'embrouillage.
L'invention est basée sur la remarque que des générateurs pseudo-aléatoires distincts peuvent néanmoins être initialisés par le même mot de contrôle, à condition de prendre des précautions particulières pour la synchronisation des dispositifs.
Le procédé selon l'invention est ainsi remarquable en ce qu'un seul dispositif de génération d'un même mot de contrôle est utilisé à la fois pour le son et pour la vidéo, et un bit ou un groupe de bits spécifique est incorporé à l'émission dans la partie en clair d'un paquet de données de son qui vient après celui en cours au moment où l'ordre d'utiliser le nouveau mot a été signifié à la partie vidéo, indiquant que le nouveau mot de contrôle qui a été transmis doit être utilisé aussi pour la partie son, pour l'embrouillage ou le désembrouillage des paquets de données qui viennent après celui où a été incorporé le dit bit ou groupe de bits spécifique.
Le procédé selon l'invention est appliqué avantageusement à un système dans lequel le son est transmis dans le standard dit NICAM.
De préférence, un des dits paquets est constitué soit d'une trame NICAM c'est-à-dire 728 bits, soit d'une séquence NICAM c'est-à-dire 16 trames de 728 bits.
Un émetteur de télévision comprenant une partie vidéo et une partie son, muni d'un modulateur pour le son numérique, qui engendre des paquets de données numériques successifs transmis par modulation d'une porteuse son et dans chacun desquels des parties sont transmises en clair et d'autres sont transmises embrouillées, d'un générateur de signaux analogiques pour la partie vidéo, qui est transmise par une porteuse vidéo, de premiers circuits munis d'une première base de temps pour engendrer des signaux de balayage ligne et trame vidéo et pour embrouiller les signaux vidéo sur la base de mots de contrôle qui sont changés au cours du temps, de seconds circuits munis d'une seconde base de temps non synchrone avec celle des circuits vidéo, pour engendrer les signaux numériques de son et pour les embrouiller sur la base de mots de contrôle qui sont changés au cours du temps, et de moyens pour, lors du changement du mot de contrôle de la vidéo, fournir le nouveau mot de contrôle à la partie vidéo et lui signifier l'ordre de changer de mot de contrôle, est muni selon l'invention d'un générateur unique de mot de contrôle qui engendre le mot de contrôle et fournit ce mot à la fois au circuit d'embrouillage du son et au circuit d'embrouillage dé la vidéo, ainsi que de moyens pour incorporer un bit ou un groupe de bits spécifique, indiquant qu'un nouveau mot de contrôle doit être utilisé, dans la partie en clair d'un paquet de données de son venant après celui en cours au moment où l'ordre d'utiliser le nouveau mot a été signifié à la partie vidéo, et de moyens pour, dans la partie son, utiliser le nouveau mot de contrôle pour les paquets de données de son venant après celui où a été incorporé le dit bit ou groupe de bits spécifique. L'émetteur selon l'invention comporte avantageusement un modulateur de son de type dit NICAM.
Un récepteur de télévision embrouillée comprenant une partie vidéo et une partie son, muni d'un démodulateur de signal analogique pour la partie vidéo et d'un démodulateur de signaux numériques pour la partie son, de circuits de démodulation et de désembrouillage différents et munis de bases de temps non synchronisées entre elles pour le son d'une part et pour la vidéo d'autre part, de circuits pour extraire les mots de contrôle, pour les décrypter, et pour communiquer en temps voulu au circuit de désembrouillage vidéo le nouveau mot de contrôle et l'ordre de changer de mot de contrôle, ce récepteur étant destiné à la réception d'un signal émis par un émetteur selon l'invention, il est muni selon l'invention d'un circuit pour détecter dans le signal de son numérique le dit bit ou groupe de bits spécifique, et de moyens pour utiliser le nouveau mot de contrôle pour le désembrouillage des paquets de données de son suivant celui dans lequel est trouvée l'indication qu'un nouveau mot de contrôle doit être utilisé.

Ces aspects de l'invention ainsi que d'autres aspects plus détaillés apparaîtront plus clairement grâce à la description suivante d'un mode de réalisation non limitatif.
La figure 1 est un bloc diagramme schématique d'un émetteur selon l'invention.
La figure 2 est un diagramme de temps montrant comment se réalise un changement de mot de contrôle.
La figure 3 est un bloc diagramme schématique d'un récepteur selon l'invention.

L'invention sera décrite sur la base d'un système de télévision dans lequel la vidéo est transmise et embrouillée selon le standard dit PAL, et le son est transmis et embrouillé selon le standard dit NICAM (pour "Near Instantaneous Companded Audio Modulation"). Le standard NICAM, qui était en 1988 l'objet d'un projet de recommandation du CCIR, est récent mais il est néanmoins déjà bien connu.

Il est clair que l'invention s'appliquerait aussi à des systèmes utilisant d'autres standards, comme par exemple le standard SECAM pour la vidéo, ou d'autres modulations numériques que le NICAM, pourvu que les données numériques de son soient transmises sous la forme de paquets successifs et que des parties de chacun de ces paquets (en-tête) soient transmises en clair et d'autres (bits de son proprement dits) soient transmises embrouillées.

Pour mémoire, une "trame" NICAM est constituée de 64 mots comprenant chacun 10 bits plus un bit de parité, c'est-à-dire au total 704 bits, précédés par un en-tête de 24 bits servant à la synchronisation et au contrôle, en-tête lui même subdivisé en 8 bits d'alignement de trame, 5 bits définissant l'application, et 11 bits de données additionnelles. Une trame contient donc 728 bits. La durée d'une trame est d'une milliseconde. Les trames sont groupées par seize trames constituant une "séquence". Bien entendu ce processus est piloté par une horloge. Celle ci a une fréquence de 728 kiloHerz. On sait embrouiller une trame en additionnant modulo deux chacun des 704 bits de données de son avec des bits issus d'un générateur pseudo-aléatoire, tout en laissant en clair l'en-tête. Le générateur pseudo-aléatoire est lui même initialisé par un mot de contrôle engendré par un autre générateur qui, lui, est purement aléatoire. Ce mot est transmis vers les récepteurs sous forme elle même cryptée et avec adjonction de codes correcteurs d'erreurs, ce qui permet aux récepteurs de reconstituer en fin de compte les bits corrects par une opération inverse de celle effectuée à l'émission, grâce à l'usage d'un générateur pseudo-aléatoire fonctionnellement identique à celui utilisé à l'émission, initialisé par le mot de contrôle ainsi transmis.

Pour mémoire encore, une ligne vidéo en PAL dure 64 microsecondes, dont environ 12 microsecondes pour le temps dit de retour de ligne. Ce processus est lui aussi piloté par une horloge. Celle ci a une fréquence beaucoup plus élevée que la fréquence ligne (par exemple 17,734375 MHz, c'est-à-dire 1135 fois la fréquence ligne) et sa fréquence est divisée pour obtenir cette dernière. Un embrouillage peut être obtenu de façon connue par exemple en coupant chaque ligne en deux parties en un point déterminé par une valeur numérique fournie par un générateur pseudo-aléatoire, et en intervertissant ces deux parties. C'est ce qu'on appelle "décalage circulaire". Le signal est transmis sous forme analogique. Dans une trame d'image, environ vingt lignes sont occultées pour le temps dit "de suppression de trame". Pendant cette suppression de trame, une partie du temps disponible est utilisée pour transmettre entre autres des données concernant l'embrouillage (données de contrôle d'accès, mot de contrôle lui même crypté à l'émission et décrypté à la réception par un procédé connu en soi, clés, etc). Le mot de contrôle ainsi transmis permet aux récepteurs de déterminer chaque point de coupure de ligne, et de rétablir les lignes par une opération inverse de celle effectuée à l'émission, grâce à l'usage d'un générateur pseudo-aléatoire identique à celui utilisé à l'émission et initialisé par le mot de contrôle.

Comme le chargement du mot de contrôle prend un certain temps, il est chargé avant que soit produit un signal indiquant qu'il faut utiliser un nouveau mot. En outre il est rechargé à intervalles réguliers pour des raisons de fiabilité et aussi pour permettre que des récepteurs allumés en cours d'émission puissent retrouver le mot de contrôle rapidement.

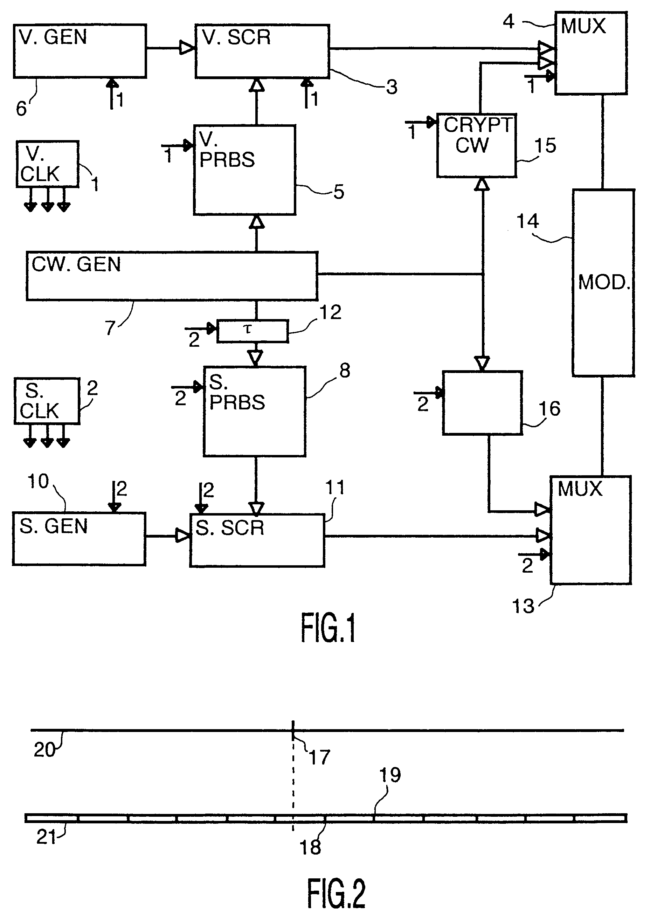

L'émetteur représenté sur la figure 1 comporte une source de signaux vidéo 6 et une source de signaux audio 10, délivrant des signaux NICAM. Les signaux issus de la source vidéo 6 passent par un module d'embrouillage vidéo 3 connu en soi et les signaux embrouillés sont amenés à un multiplexeur 4 qui y ajoute des données numériques, notamment celles concernant l'embrouillage vidéo, pendant les temps de retour de trame ou dans certaines lignes vidéo utiles. Un générateur de séquence pseudo-aléatoire 5 fournit à l'embrouilleur 3 une valeur numérique permettant de déterminer un point de coupure de ligne. Tous ces modules fonctionnent en synchronisme grâce à une horloge 1 (ayant par exemple une fréquence de base de 17,734375 MHz) qui leur fournit divers signaux de synchronisation, repérés chacun par une flèche "1". Les signaux numériques issus de la source audio 10 passent par un module d'embrouillage audio 11 connu en soi et les signaux embrouillés sont amenés à un multiplexeur 13 qui rajoute des données numériques dans l'en-tête au début de chaque trame. Un générateur de séquence pseudo-aléatoire 8 fournit à l'embrouilleur 11 des bits à ajouter modulo deux aux 704 bits de son numérique. Ces modules audio fonctionnent en synchronisme grâce à une horloge 2 (ayant par exemple une fréquence de base de 728 kHz) qui leur fournit divers signaux de synchronisation, repérés chacun par une flèche "2".
Enfin un modulateur 14 émet ensemble les signaux audio et vidéo issus des modules 4 et 13, par exemple sur une porteuse haute fréquence.

Les deux parties son et vidéo décrites ci-dessus sont complètement indépendantes. Leurs horloges 1 et 2 sont distinctes et aucun moyen n'est prévu pour assurer une quelconque synchronisation entre elles. En outre leurs fréquences n'ont aucun plus petit commun diviseur qui permettrait leur alignement l'une sur l'autre. De ce fait, les moyens d'embrouillage 5,3 pour la vidéo d'une part, et 8,11 pour le son d'autre part, qui sont basés sur un repérage temporel précis appuyé pour chacun d'eux sur l'horloge des signaux considérés, sont complètement indépendants l'un de l'autre. Notamment leurs générateurs pseudo-aléatoires 5 et 8 sont distincts.

Néanmoins un seul dispositif 7 de génération d'un mot de contrôle est présent, à la fois pour le son et pour la vidéo. Il contient un générateur de séquence purement aléatoire, c'est-à-dire totalement imprévisible, qui fournit une telle séquence à la demande, pour engendrer un mot de contrôle. Lorsqu'un nouveau mot de contrôle est fourni, sous le contrôle du module 7 lui même, ce nouveau mot de contrôle est fourni à un module 15 qui le transforme par un moyen de cryptage connu et lui adjoint de façon également connue un code détecteur d'erreur, avant de le fournir au multiplexeur 4 pour qu'il soit transmis vers les récepteurs, et le changement est signifié dans la partie vidéo au générateur pseudo-aléatoire 5 de façon que le nouveau mot de contrôle soit utilisé pour une future initialisation de ce générateur pseudo-aléatoire, tout ceci de façon connue. Le changement est aussi signifié à un module 16, lequel fournit au multiplexeur 13 un signal indiquant qu'un bit ou un groupe de bits spécifique doit être incorporé dans l'en-tête (de préférence dans l'un des 11 bits de données additionnelles) d'un paquet de données de son, après que le nouveau mot de contrôle ait été complètement transmis, ce bit ou ce groupe de bits spécifique indiquant aux récepteurs qu'un nouveau mot de contrôle est disponible et devra être utilisé pour l'embrouillage ou le désembrouillage de la partie embrouillée des paquets. Le nouveau mot de contrôle, dans la partie son, ne sera utilisé que pour un paquet de données ultérieur par rapport à celui où a été incorporé le dit bit ou groupe de bits spécifique, grâce à un circuit de mémoire tampon 12 qui retient le nouveau mot pendant le temps nécessaire puis l'applique au générateur pseudo-aléatoire 8 pour un paquet de bits ultérieur. Un tel paquet peut être constitué d'une trame NICAM, c'est-à-dire 728 bits, mais aussi d'une séquence NICAM, c'est-à-dire 16 trames de 728 bits.

Sur la figure 2, la ligne 20 figure le déroulement du temps pour la partie vidéo. On suppose que l'ordre de changer le mot de contrôle arrive à l'instant 17 (le nouveau mot ayant déjà été transmis auparavant). La ligne 21 figure le déroulement du temps pour la partie audio. Les éléments successifs séparés par une barre verticale représentent chacun un paquet c'est-à-dire, soit une trame, soit 16 trames. Le bit ou le groupe de bits spécifique indiquant qu'un nouveau mot de contrôle est disponible est incorporé dans le paquet commençant en 18. Le nouveau mot de contrôle ne sera utilisé que pour le paquet de données ultérieur commençant en 19.

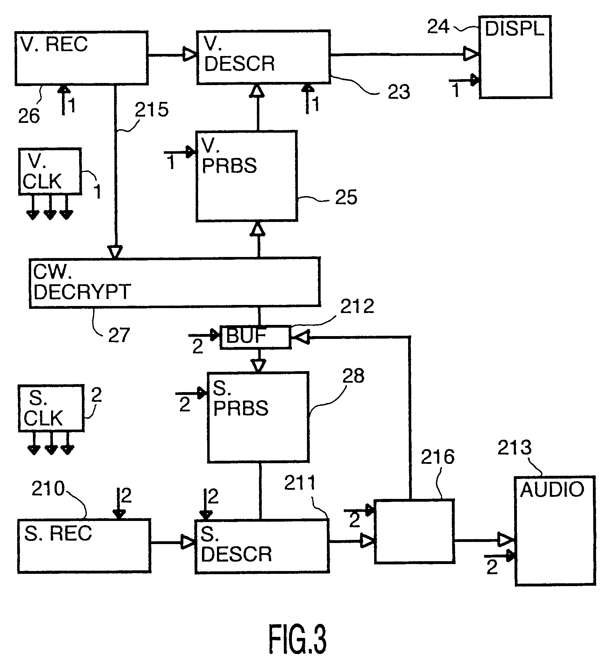

Le récepteur représenté sur la figure 3 comporte une partie de réception proprement dite 26 pour les signaux vidéo (circuits haute-fréquence, fréquence intermédiaire et démodulation fournissant la vidéo en bande de base) et une partie de réception 210 pour les signaux audio numériques (circuits haute-fréquence, fréquence intermédiaire et démodulation, fournissant le son sous forme numérique). La partie 26 comprend aussi un circuit qui extrait les données numériques présentes pendant les temps de suppression de trame et les fournit sur une connexion 215. Les signaux issus de la partie de réception vidéo 26 passent par un module de désembrouillage vidéo 23 connu en soi et les signaux désembrouillés sont amenés à un élément d'affichage vidéo 24 comportant des circuits vidéo et un tube ou un autre moyen d'affichage d'images. Un générateur de séquence pseudo-aléatoire 25, fonctionnellement identique à celui 5 de l'émetteur, fournit au désembrouilleur 23 la valeur numérique permettant de déterminer le point de coupure de ligne et de rétablir la ligne normale. Tous ces modules fonctionnent en synchronisme grâce à une horloge 1 (ayant par exemple une fréquence de base de 17,734375 MHz) qui leur fournit divers signaux de synchronisation, repérés chacun par une flèche "1".
Les signaux issus de la partie audio 210 passent par un module de désembrouillage audio 211 connu en soi et les signaux désembrouillés sont amenés à un élément de reproduction du son 213 comportant un circuit de décodage connu (convertisseur numérique/analogique et autres), un circuit d'amplification et un haut-parleur ou un autre moyen de reproduction du son. Un générateur de séquence pseudo-aléatoire 28 fournit au désembrouilleur 211 des bits à ajouter modulo deux à la partie embrouillée du signal de son numérique pour la désembrouiller. Ces modules audio fonctionnent en synchronisme grâce à une horloge 2 (ayant par exemple une fréquence de base de 728 kHz) qui leur fournit divers signaux de synchronisation, repérés chacun par une flèche "2".

Là encore, les deux parties son et vidéo sont complètement indépendantes et les générateurs pseudo aléatoires 25 et 28 sont distincts. Néanmoins un seul dispositif 27 de décryptage et de restitution du mot de contrôle reçu de la partie de réception 26 est présent, à la fois pour le son et pour la vidéo. Lorsque l'ordre de changer le mot de contrôle arrive, le changement est signifié dans la partie vidéo au générateur pseudo-aléatoire 25 auquel est fourni le nouveau mot de contrôle, lequel sera utilisé pour la prochaine initialisation de ce générateur pseudo-aléatoire. Le nouveau mot de contrôle est aussi fourni, dans la partie son, à un circuit de mémoire tampon 212 qui le retient pendant un certain temps. Dans la partie son, le changement est détecté dans le contenu de l'en-tête de paquet par un module 216, lequel donne un signal de départ au circuit 212 pour que ce dernier applique le nouveau mot de contrôle au générateur pseudo-aléatoire 28 pour le paquet de bits suivant.
On peut aussi en variante transmettre le mot de contrôle crypté dans la voie son, par exemple en transmettant le premier bit de ce mot dans une position d'un en-tête de paquet, le second bit dans la même position de l'en-tête du paquet suivant et ainsi de suite. Alors ce serait le circuit 216 qui lirait ce mot, le décrypterait et le chargerait dans la mémoire 212, et le fournirait à la partie vidéo. On peut aussi le transmettre à la fois dans la voie vidéo et dans la voie son.

## Revendications

1. Procédé pour l'embrouillage et le désembrouillage dans un système de diffusion et de réception d'un signal de télévision embrouillé comprenant d'une part un signal vidéo analogique et d'autre part des données de son numérique transmises en multiplex de fréquences, dans lequel le signal vidéo analogique est transmis par lignes et trames dont les instants de début sont commandés par une première base de temps, et les données de son numérique sont transmises sous la forme de paquets successifs dont des parties sont transmises en clair et d'autres sont transmises embrouillées, le rythme des données étant contrôlé par une seconde base de temps non synchrone avec celle de la vidéo, cependant que des mots de contrôle, qui sont utilisés pour l'embrouillage et le désembrouillage, sont changés au cours du temps, et que lorsqu'on désire changer de mot de contrôle pour le signal vidéo, le nouveau mot de contrôle est d'abord déterminé et transmis, puis l'ordre d'utiliser le nouveau mot est transmis à la partie vidéo, **caractérisé** en ce qu'un seul dispositif de génération d'un même mot de contrôle est utilisé à la fois pour le son et pour la vidéo, et un bit ou un groupe de bits spécifique est incorporé à l'émission dans la partie en clair d'un paquet de données de son qui vient après celui en cours au moment où l'ordre d'utiliser le nouveau mot a été signifié à la partie vidéo, indiquant que le nouveau mot de contrôle qui a été transmis doit être utilisé aussi pour la partie son, pour l'embrouillage ou le désembrouillage des paquets de données qui viennent après celui où a été incorporé le dit bit ou groupe de bits spécifique.

2. Procédé selon la revendication 1, **caractérisé** en ce qu'il est appliqué à un système dans lequel le son est transmis dans le standard dit NICAM.

3. Procédé selon la revendication 2, **caractérisé** en ce qu'un des dits paquets est constitué d'une trame NICAM c'est-à-dire 728 bits.

4. Procédé selon la revendication 2, **caractérisé** en ce qu'un des dits paquets est constitué d'une séquence NICAM c'est-à-dire 16 trames de 728 bits.

5. Émetteur de télévision comprenant une partie vidéo et une partie son, muni d'un modulateur pour le son numérique, qui engendre des paquets de données numériques successifs transmis par modulation d'une porteuse son et dans chacun desquels des parties sont transmises en clair et d'autres sont transmises embrouillées, d'un générateur de signaux analogiques pour la partie vidéo, qui est transmise par une porteuse vidéo, de premiers circuits munis d'une première base de temps pour engendrer des signaux de balayage ligne et trame vidéo et pour embrouiller les signaux vidéo sur la base de mots de contrôle qui sont changés au cours du temps, de seconds circuits munis d'une seconde base de temps non synchrone avec celle des circuits video, pour engendrer les signaux numériques de son et pour les embrouiller sur la base de mots de contrôle qui sont changés au cours du temps, et de moyens pour, lors du changement du mot de contrôle de la vidéo, fournir le nouveau mot de contrôle à la partie vidéo et lui signifier l'ordre de changer de mot de contrôle, **caractérisé** en ce qu'il est muni d'un générateur unique de mot de contrôle qui engendre le mot de contrôle et fournit ce mot à la fois au circuit d'embrouillage du son et au circuit d'embrouillage de la vidéo, ainsi que de moyens pour incorporer un bit ou un groupe de bits spécifique, indiquant qu'un nouveau mot de contrôle doit être utilisé, dans la partie en clair d'un paquet de données de son venant après celui en cours au moment où l'ordre d'utiliser le nouveau mot a été signifié à la partie vidéo, et de moyens pour, dans la partie son, utiliser le nouveau mot de contrôle pour les paquets de données de son venant après celui où a été incorporé le dit bit ou groupe de bits spécifique.

6. Émetteur selon la revendication 5, **caractérisé** en ce que son modulateur de son est de type dit NICAM.

7. Récepteur de télévision embrouillée comprenant une partie vidéo et une partie son, muni d'un démodulateur de signal analogique pour la partie vidéo et d'un démodulateur de signaux numériques pour la partie son, de circuits de démodulation et de désembrouillage différents et munis de bases de temps non synchronisées entre elles pour le son d'une part et pour la vidéo d'autre part, de circuits pour extraire les mots de contrôle, pour les décrypter, et pour communiquer en temps voulu au circuit de désembrouillage vidéo le nouveau mot de contrôle et l'ordre de changer de mot de contrôle, **caractérisé** en ce que, ce récepteur étant destiné à la réception d'un signal émis par un émetteur selon l'une des revendications 5 ou 6, il est muni d'un circuit pour détecter dans le signal de son numérique le dit bit ou groupe de bits spécifique, et de moyens pour utiliser le nouveau mot de contrôle pour le désembrouillage des paquets de données de son suivant celui dans lequel est trouvée l'indication qu'un nouveau mot de contrôle doit être utilisé.
